# EUROPÄISCHE PATENTSCHRIFT

(11) **EP 0 752 169 B1**
(45) Veröffentlichungstag und Bekanntmachung des Hinweises auf die Patenterteilung: **29.04.1998**
(21) Anmeldenummer: 95909781.7
(22) Anmeldetag: 25.02.1995
(51) Int. Cl.: H02J 13/00, H04B 3/56

(54) **EINRICHTUNG ZUR DATENÜBERTRAGUNG IN ENERGIEVERSORGUNGS-KABELNETZEN**
DATA TRANSMISSION DEVICE IN POWER SUPPLY CABLE NETWORKS
SYSTEME DE TRANSMISSION DE DONNEES DANS DES RESEAUX CABLES DE DISTRIBUTION D'ENERGIE

(30) Priorität: 21.03.1994 DE 4409618
(43) Veröffentlichungstag der Anmeldung: 08.01.1997
(73) Patentinhaber: KARL PFISTERER ELEKTROTECHNISCHE SPEZIALARTIKEL GMBH & CO. KG, 70327 Stuttgart (DE)
(72) Erfinder: SANDER, Dieter, D-70619 Stuttgart (DE); FISCHER, Gottfried, D-70599 Stuttgart (DE); BECHTEL, Manfred, D-34127 Kassel (DE); HEISS, Werner, D-34134 Kassel (DE)
(74) Vertreter: Patentanwälte Bartels und Partner
(86) Internationale Anmeldenummer: EP9500688
(87) Internationale Veröffentlichungsnummer: WO9526068

(56) Entgegenhaltungen:
- DE-C- 689 355
- DE-U- 9 315 875
- US-A- 2 141 286
- PATENT ABSTRACTS OF JAPAN vol. 10, no. 39 (E-381) (2096) 15 Februar 1986 & JP-A-60 196 021 (TOUKOU DENKI K.K.) 4 Oktober 1985
- PATENT ABSTRACTS OF JAPAN vol. 7, no. 45 (E-160) (1190) 23 Februar 1983 & JP-A-57 194 641 (DAINICHI NIPPON DENSEN K.K.) 30 November 1982

## Beschreibung

Die Erfindung betrifft eine Einrichtung zur Datenübertragung in Energieversorgungs-KabeInetzen, insbesondere Ortsnetzen, welche die Merkmale des Oberbegriffs des Anspruches 1 aufweist.

Bei einer bekannten Einrichtung dieser Art (G 93 15 875.0), die es ermöglicht, auch in Kabelnetzen Daten zu Meß- und Überwachungszwecken sowie Steuerungszwecken zu übertragen, wird der im Kabelschirm fließende Strom zur Datenübertragung genutzt, wobei im Falle eines mehradrigen Kabels wahlweise die Gesamtabschirmung des Kabels oder der Schirm einer der Adern zur Verfügung steht. Am Anfang und Ende der Übertragungsstrecke ist dabei je ein Stromwandler erforderlich, an deren Sekundärseite ein Datensender bzw. Datenempfänger angeschlossen ist. Nachteilig ist hierbei vor allem, daß der Aufwand für die Stromwandler groß ist, da zum einen der über den Schirm fließende Strom im Vergleich zum Nennstrom des Kabels relativ groß ist und zum anderen die Stromwandler in der Lage sein müssen, den im Falle eines Kurzschlusses zwischen dem Leiter und der Abschirmung fließenden Strom führen zu können.

Der Erfindung liegt die Aufgabe zugrunde, eine verbesserte Einrichtung der eingangs genannten Art zu schaffen. Diese Aufgabe löst eine Einrichtung mit den Merkmalen des Anspruches 1.

Die bei der erfindungsgemäßen Einrichtung als Koppelglieder dienenden Spulen sind weniger aufwendig als die bei der bekannten Einrichtung erforderlichen Stromwandler. Ferner wird der Aufwand dadurch verringert, daß die Datenübertragung praktisch verlustfrei erfolgt, weil nicht der Strom der Abschirmung, sondern deren Spannung verwendet wird. Hinzu kommt als weiterer, wesentlicher Vorteil, daß durch die Spulen der Schirmstrom wesentlich reduziert werden kann, wodurch das Verhältnis von der von den Verbrauchern abgenommenen Energie zu der in das Kabelnetz eingespeisten Energie merklich verbessert werden kann. Allein aufgrund dieser Energieersparnis amortisiert sich der Aufwand für die erfindungsgemäße Einrichtung in einem relativ kurzen Zeitraum.

Vorzugsweise weisen die Spulen je einen Kern aus ferromagnetischem Material auf. Zum einen läßt sich hierdurch mit relativ geringem Aufwand ein im Interesse der Reduzierung des Schirmstromes großer induktiver Widerstand erzielen. Zum anderen läßt sich mit einer derartigen Spule ohne zusätzlichen Aufwand die an der Spule auftretende Spannung im Schutzspannungsbereich halten, weil die Spule so ausgelegt werden kann, daß sie schon weit unterhalb eines eventuell fließenden Kurzschlußstromes im Sättigungsbereich ist.

Bei einem mehradrigen Kabel können die Spulen an den Schirm einer der Adern angeschlossen sein. In diesem Falle läßt sich ohne Schwierigkeiten ein redundantes System realisieren, da hierzu nur an den Schirm einer anderen Phase entsprechende Spulen angeschlossen zu werden brauchen, denen Datensender und Datenempfänger zugeordnet sind.

Im folgenden ist die Erfindung anhand eines in der Zeichnung dargestellten Ausführungsbeispiels im einzelnen erläutert. Es zeigen
- Fig. 1: eine schematische Darstellung des Ausführungsbeispiels,
- Fig. 2: ein Ersatzschaltbild des Ausführungsbeispiels,
- Fig. 3: ein Diagramm der an einer Spule auftretenden Spannung in Abhängigkeit von dem sie durchfließenden Strom.

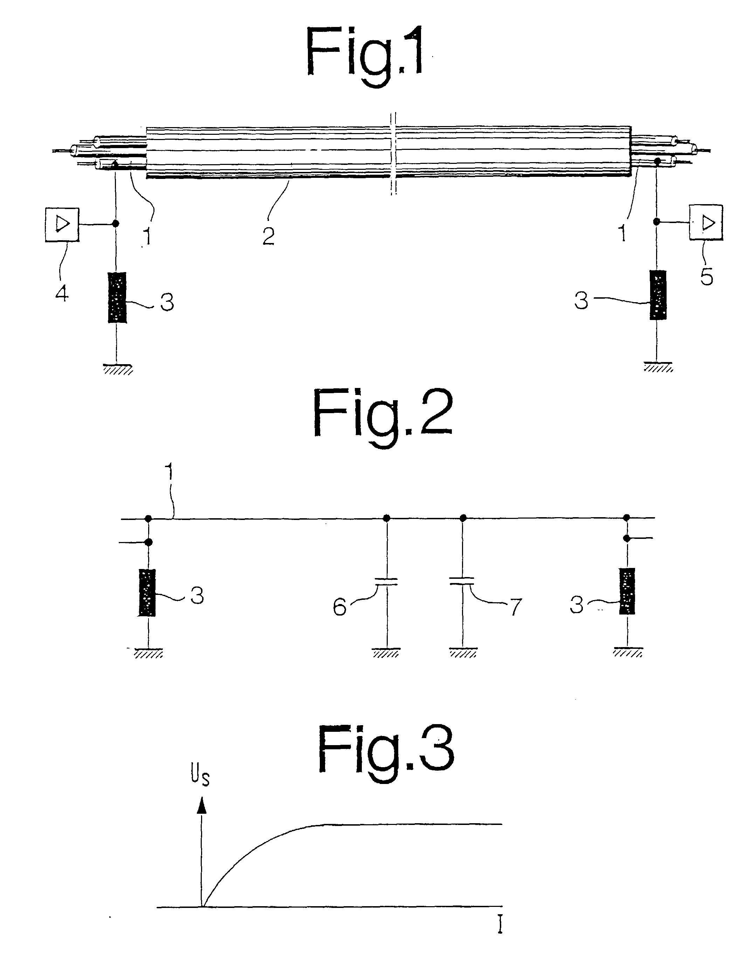

Um in einem Energieversorgungs-Kabelnetz, beispielsweise einem Mittelspannungsnetz, Daten und Steuerbefehle übertragen zu können, um beispielsweise in einem Störungsfalle aufgrund der von den einzelnen Netzstationen übermittelten Daten erkennen zu können, welche der Netzstationen gestört ist, so daß nicht mehr, wie noch vielfach üblich, Fachpersonal von einer zur anderen Station fahren muß, um diese vor Ort kontrollieren zu können, sind an den Schirm 1 einer der Adern eines mehradrigen Energieübertragungs-Kabels 2 am Anfang und Ende der durch dieses Kabel 2 gebildeten Übertragungsstrecke je eine Spule 3 angeschlossen, die andererseits auf Erdpotential liegt. Es wäre aber auch möglich, die Spulen 3 an den alle Adern umfassenden Kabelschirm anzuschließen. Die Spulen 3 weisen einen ferromagnetischen Kern auf. Durch ihren induktiven Widerstand wird der über den Schirm 1 fließende Strom, der bis zu etwa 10% des Nennstromes der Ader erreichen kann, erheblich reduziert. Die Spulen 3 sind so dimensioniert, daß sie in der Lage sind, den im Falle eines Kurzschlusses zwischen dem Leiter der Ader und dem Schirm 1 kurzzeitig fließenden Strom ohne Schaden führen zu können. Ferner sind, wie Fig.3 zeigt, die Spulen 3 so ausgelegt, daß die an ihnen auftretende Spannung Uₛ im Sättigungsbereich des Spulenkernes 50 Volt nicht überschreitet und damit im Schutzspannungsbereich liegt. Hierdurch wird in einfacher Weise verhindert, daß ein Kurzschlußstrom zu einem höheren Wert der an der Spule anliegenden Spannung führt.

Zusammen mit den am Anfang und Ende der Übertragungsstrecke vorgesehenen Spulen 3 bilden die Kapazitäten 6 und 7 des Schirmes 1 gegenüber Erde und gegenüber dem Schirm des Kabels einen Schwingkreis.

An die Verbindung zwischen der in Fig.1 links dargestellten Spule 3 und dem Schirm 1 ist ein Datensender 4, an die Verbindung zwischen der in Fig.1 rechts dargestellten Spule 3 und dem Schirm 1 ein Datenempfänger 5 angeschlossen. Der Datensender 4 enthält einen Oszillator, dessen Frequenz auf die Schwingkreis-Resonanzfrequenz abgestimmt ist. Die Funktionsfähigkeit der Datenübertragungseinrichtung ist aber nicht in Frage gestellt, wenn eine gewisse Abweichung zwischen der Schwingkreis-Resonanzfrequenz und der Oszillatorfrequenz vorhanden ist. Deshalb wird in vielen Fällen eine feste Oszillatorfrequenz ausreichend sein. Sollte dies nicht der Fall sein, kann man den Oszillator so ausbilden, daß seine Frequenz verändert und dadurch an die Resonanzfrequenz angepaßt werden kann.

Der Datensender 4 enthält ferner einen Modulator, mittels dessen auf die Oszillatorfrequenz die zu übertragenden Daten aufmoduliert werden. Im Ausführungsbeispiel erfolgt die Aufmodulierung, durch Frequenzumtastung (FSK). Der Datenempfänger 5 enthält einen Demodulator, welcher die an der ihm zugeordneten Spule 3 auftretende Spannung demoduliert und dadurch die über die Übertragungsstrecke übertragenden Daten verfügbar macht.

Sofern eine Datenübertragung in beiden Richtungen erforderlich ist, müssen an beide Spulen 3 je ein Datensender 4 und je ein Datenempfänger 5 angeschlossen sein.

Eine Redundanz läßt sich in einfacher Weise dadurch erreichen, daß mit dem Schirm einer zweiten Ader am Anfang und Ende der Übertragungsstrecke je eine Spule 3 verbunden wird, an die wenigstens ein Datensender 4 bzw. ein Datenempfänger 5 angeschlossen sind.

## Patentansprüche

1. Einrichtung zur Datenübertragung in Energieversorgungs-Kabelnetzen, insbesondere Ortsnetzen, mit wenigstens einem Sende- und/oder Empfangsgerät (4,5) am Anfang und Ende des die Übertragungsstrecke bildenden, einen Schirm aufweisenden Energieübertragungskabels (1), wobei jedes Sende- und/oder Empfangsgerät ein die Verbindung zum Schirm herstellendes Koppelglied aufweist, an welches ein Datensender (4) und/oder Datenempfänger (5) angeschlossen ist, dadurch gekennzeichnet, daß
a) die Koppelglieder durch je eine Spule (3) gebildet sind, die einerseits mit dem Schirm (1) des Energieübertragungskables (2) verbunden sind und andererseits auf Nullpotential liegen,
b) die Datensender (4) und Datenempfänger (5) mit der mit dem Schirm (1) verbundenen Seite der zugeordneten Spule (3) verbunden sind,
c) jeder Datensender (4) einen Oszillator für eine Trägerfrequenz aufweist, die wenigstens annähernd gleich der Resonanzfrequenz des aus den am Anfang und Ende der Übertragungsstrecke vorgesehenen Spulen und der Kapazität des Schirmes (1) gebildeten Schwingkreises ist,
d) jeder Datensender (4) eine Modulationseinrichtung und jeder Datenempfänger (5) eine Demodulationseinrichtung für die Modulation der Trägerfrequenz mit den zu übertragenden Daten bzw. die Demodulation aufweist.

2. Einrichtung nach Anspruch 1, dadurch gekennzeichnet, daß die Spulen (3) für den im Falle eines Kurzschlusses zwischen dem Schirm (1) und der zugeordneten Ader des Energieübertragungskabels (2) auftretenden Kurzschlußstrom dimensioniert sind.

3. Einrichtung nach Anspruch 1 oder 2, dadurch gekennzeichnet, daß die Spulen (3) je einen Kern aus ferromagnetischem Material aufweisen.

4. Einrichtung nach Anspruch 3, dadurch gekennzeichnet, daß die Wicklung der Spule (3) und ihr Kern so ausgeführt sind, daß die im Sättigungsfalle an der Spule (3) anliegende Spannung noch im Schutzspannungsbereich liegt.

5. Einrichtung nach einem der Ansprüche 1 bis 4, dadurch gekennzeichnet, daß bei einem mehradrigen Energieübertragungskabel (2) die Spulen (3) an den Schirm einer der Adern angeschlossen sind.

6. Einrichtung nach Anspruch 5, dadurch gekennzeichnet, daß zusätzlich zu den mit dem Schirm (1) einer der Adern verbundenen Spulen (3) und den an diese angeschlossenen Datensendern und/oder Datenempfängern mit dem Schirm einer anderen Ader am Anfang und Ende der Übertragungsstrecke Spulen verbunden sind, an die ein Datensender bzw. ein Datenempfänger angeschlossen sind.

## Claims

1. Device for transmitting data in power supply cable networks, particularly local networks, having at least one transmitter and/or receiver (4, 5) at the start and end of the power transmission cable (1) forming the transmission path and possessing a screen, each transmitter and/or receiver having a coupling which forms the connection with the screen and to which a data transmitter (4) and/or data receiver (5) is connected, characterised in that
a) the couplings are formed by one coil (3) each, which coils on the one hand are connected to the screen (1) of the power transmission cable (2) and, on the other, are at zero potential,
b) the data transmitters (4) and data receivers (5) are connected to that end of the associated coil (3) which is connected to the screen (1),
c) each data transmitter (4) has an oscillator for a carrier frequency which is at least approximately equal to the resonance frequency of the oscillating circuit formed by the coils provided at the start and end of the transmission path and by the capacitor of the screen (1),
d) each data transmitter (4) has a modulating device and each data receiver (5) has a demodulating device for modulating and demodulating, respectively, the carrier frequency with the data to be transmitted.

2. Device according to Claim 1,
characterised in that the coils (3) are of a size to cope with the short circuit current occurring in the event of a short circuit between the screen (1) and the associated core of the power transmission cable (2).

3. Device according to Claim 1 or 2,
characterised in that the coils (3) each have a core of ferromagnetic material.

4. Device according to Claim 3,
characterised in that the winding of the coil (3) and the core of the coil are designed so that the voltage across the coil (3) in the event of saturation is still within the safety range.

5. Device according to any one of Claims 1 to 4, characterised in that, in the case of a multi-core power transmission cable (2), the coils (3) are connected to the ecreen of one of the cores.

6. Device according to Claim 5,
characterised in that, in addition to the coils (3) connected to the screen (1) of one of the cores and in addition to the data transmitters and/or data receivers connected to those coils, there are connected to the screen of another core, at the start and end of the transmission path, coils to which a data transmitter and a data receiver, respectively, are connected.

## Revendications

1. Dispositif pour transporter des données dans des réseaux câblés de fourniture d'énergie, en particulier dans des réseaux régionaux, avec au moins un dispositif d'émission et/ou de réception (4, 5) au début et à la fin d'un câble pour transporter l'énergie comportant un écran qui forment la zone de transport, dans lequel chaque dispositif d'émission et/ou de réception présente un élément de couplage constituant la liaison à l'écran, auquel élément un émetteur de données (4) et/ ou un récepteur de données (5) est raccordé, caractérisé en ce que :
a) les éléments de couplage sont formés chacun au moyen d'une bobine (3), ils sont reliés d'un côté à l'écran (1) du câble pour transporter l'énergie et sont de l'autre côté à un potentiel nul,
b) l'émetteur de données (4) et le récepteur de données (5) sont reliés avec le côté de l'écran (1) relié à la bobine (3) fournie,
c) chaque émetteur de données (4) comporte un oscillateur pour une fréquence porteuse, laquelle est sensiblement égale à la fréquence de résonance du circuit oscillant formé par les bobines prévues au début et à la fin de la zone de transport et la capacité de l'écran,
d) chaque émetteur de données (4) comporte un dispositif de modulation et chaque récepteur de données (5) comporte un dispositif de démodulation afin de moduler sur, respectivement démoduler de, la fréquence porteuse, les informations à transporter.

2. Dispositif selon la revendication 1, caractérisé en ce que les bobines (3) sont dimensionnées pour le courant de court-circuit survenant dans le cas d'un court-circuit entre l'écran (1) et le brin prévu du câble de transport de l'énergie.

3. Dispositif selon la revendication 1 ou 2, caractérisé en ce que les bobines (3) comportent chacune un noyau en matière ferromagnétique.

4. Dispositif selon la revendication 3, caractérisé en ce que le bobinage de la bobine (3) et son noyau sont exécutés de manière telle que dans le cas d'une saturation, la tension aux bornes de la bobine reste encore dans le domaine de tension de sécurité.

5. Dispositif selon l'une des revendications 1 à 4, caractérisé en ce que dans le cas d'un câble pour transporter l'énergie (2) muni de multiples conducteurs, les bobines (3) sont raccordées à l'écran de l'un des brins.

6. Dispositif selon la revendication 5, caractérisé en ce que, outre les bobines (3) raccordées à l'écran de l'un des brins et outre les émetteurs de données et/ ou récepteurs de données qui sont raccordés à celui-ci, des bobines sont raccordées à l'écran d'un autre brin au début et à la fin de la zone de transport de données, auxquelles bobines sont raccordés un émetteur de données, respectivement un récepteur de données.
